# EUROPÄISCHE PATENTSCHRIFT

(11) **EP 3 041 434 B1**
(45) Veröffentlichungstag und Bekanntmachung des Hinweises auf die Patenterteilung: **08.07.2020**
(21) Anmeldenummer: 14758410.6
(22) Anmeldetag: 03.09.2014
(51) Int. Cl.: A61C 8/00

(54) **DENTALRESTAURATION**
DENTAL RESTORATION
RESTAURATION DENTAIRE

(30) Priorität: 03.09.2013 DE 102013014660
(43) Veröffentlichungstag der Anmeldung: 13.07.2016
(73) Patentinhaber: Ivoclar Vivadent AG, 9494 Schaan (LI)
(72) Erfinder: SCHWEIGER, Josef, 83346 Bergen (DE)
(74) Vertreter: Baronetzky, Klaus
(86) Internationale Anmeldenummer: PCT/EP2014/068761
(87) Internationale Veröffentlichungsnummer: WO 2015/032831

(56) Entgegenhaltungen:
- EP-A1- 2 289 461
- EP-A1- 2 452 650
- WO-A1-2012/126475
- WO-A1-2013/004387
- WO-A1-2013/050796
- US-A- 5 098 294

## Beschreibung

Die Erfindung betrifft eine Dentalrestauration, gemäß dem Oberbegriff von Anspruch 1.-

Dentalrestaurationen, wie sie hier zur Rede stehen, weisen typischerweise einen Basiskörper auf, der aus einem Implantat in Kombination mit einem Abutment besteht, sowie einer Suprakonstruktion, die an dem Basiskörper befestigt ist. Die Abutments können individuell hergestellt werden, beispielsweise durch spanabhebende Bearbeitung, oder aber vorgefertigt sein. Die Suprakonstruktion besteht typischerweise aus einer Dentalkeramik, beispielsweise aus Lithiumdisilikat oder einer Oxidkeramik, wobei Lithiumdisilikat oder andere Silikatkeramiken beispielsweise mittels CAD/CAM-Verfahren gefräst werden können.

Es ist auch vorgeschlagen worden, ein Positivmodell der Suprakonstruktion aus einem rückstandsfrei entfernbaren Kunststoff herzustellen, dann in an sich bekannter Weise einzubetten und auszubrennen und die so erzeugte Negativform mit einer Presskeramik zu füllen.

Die Suprakonstruktionen sind bei vielen Dentalrestaurationen, wie sie bereits realisiert worden sind, entweder lösbar oder nicht lösbar mit dem Basiskörper verbunden.

Bei den nicht lösbaren Verbindungen wird typischerweise das Abutment an dem Implantat festgeschraubt und dann die beispielsweise aus dem vollen gefertigte, also gefräste, Suprakonstruktion unter Belassung eines geeigneten Klebespalts aufgeklebt. Bei den lösbaren Suprakonstruktionen muss ein geeigneter Zugangskanal geschaffen werden, der sich in der Verlängerung der Schraubenachse erstrecken kann. Durch diesen hindurch lässt sich die Abutmentschraube der Schraubverbindung einführen und entfernen.

Bei Schneidezähnen schneidet die Wurzelachse - und dementsprechend in der Regel auch die Implantatachse - die Suprakonstruktion an der Labialseite, wenn ein gerade Zugangskanal realisiert ist. Die Öffnung des Zugangskanals kommt daher recht unschön auch auf der Labialseite der Suprakonstruktion zu liegen und auch bei geeignetem Verschließen ist sie typischerweise sichtbar.

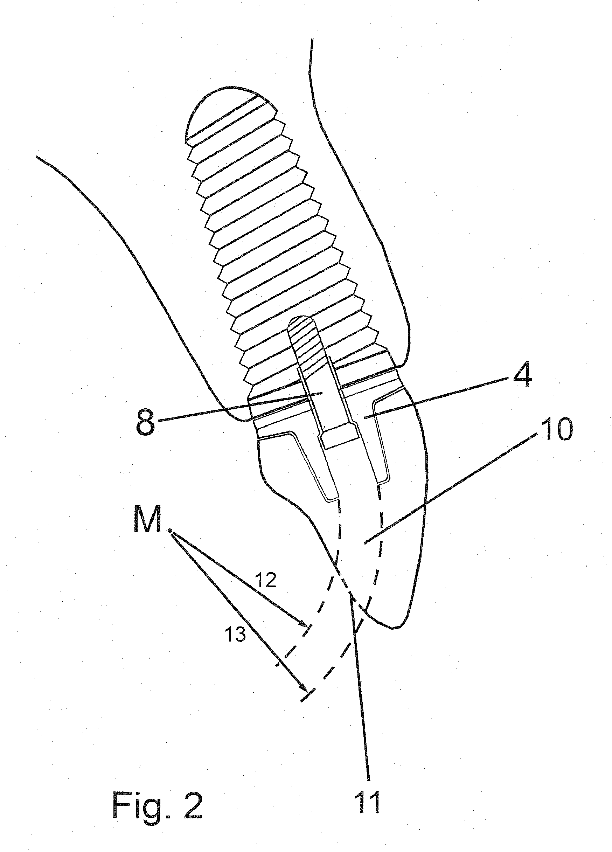

Um diesem Übelstande zu begegnen, sind auch gebogene Zugangskanäle vorgeschlagen worden und in zahlreichen Versionen mittlerweile bekannt geworden. Beispielsweise ist aus der EP 2 452 650 A1 ein gebogener Zugangskanal bekannt geworden, der sogar S-förmig geschwungen sein kann. Figur 2b dieser Vorveröffentlichung zeigt, dass der Zugangskanal dann an der Lingualseite der Suprakonstruktion, nämlich des dortigen Schneidezahns, enden kann. Dieser Zugangskanal kann beispielsweise mit lichthärtbarem PMMA verschlossen werden, wobei typischerweise aufgrund der Materialunterschiede dort so auf diese Weise ein Irritationshindernis gebildet wird, so dass die Zunge des Patienten dazu neigt, dort irritiert zu werden.

Aufgrund der Krümmung des Zugangskanals ist es erforderlich, einen recht großen Durchmesser zu wählen, um die Abutmentschraube hindurchführen zu können.

Es ist auch bereits vorgeschlagen worden, die Implantatachse etwas schräg zur Winkelachse verlaufen zu lassen, wozu beispielsweise auf die Firma Southern Implants, Eningen, Deutschland, zu verweisen ist. Bei Frontzähnen lässt sich hierdurch die Implantatachse um etwa 10° gegenüber der Wurzelachse neigen, so dass sie etwas steiler zur Okklusionsebene verläuft - allerdings immer noch nicht senkrecht. Diese Lösung hat andererseits auch verschieden Nachteile.

WO 2013/050796 A1 offenbart ein Beispiel für eine Kanalbildung für das Befestigungselement einer dentalen Suprakonstruktion.

Daher liegt der Erfindung die Aufgabe zugrunde, eine Dentalrestauration gemäß dem Oberbegriff von Anspruch 1 zu schaffen, die ein vermindertes oder sogar sehr deutlich vermindertes Irritationshindernis für die Zunge eines Patienten bildet, ohne dass ästhetische Kompromisse eingegangen werden müssten.

Diese Aufgabe wird erfindungsgemäß durch Anspruch 1 gelöst. Vorteilhafte Weiterbildungen ergeben sich auch den Unteransprüchen.

Die erfindungsgemäße Dentalrestauration weist den besonderen Vorteil auf, dass zunächst eine lösbare Suprakonstruktion bereitgestellt wird. Studien (Papaspyridakos P, Chen Cj, Chuang SK, Weber HP, Gallucci GO." A systematic review of biologic and technical complications with fixed implant rehabilitations for edentulous patients.", Int J Oral Maxillofac Implants 2012;27:102-110.) haben ergeben, dass nach zehn Jahren Tragedauer etwa 60% der Dentalrestaurationen, die auf Implantaten basieren, zumindest geschädigt sind und eines zumindest partiellen Austauschs bedürfen. Bei nicht-lösbaren Suprakonstruktionen führt dies zu signifikanten zahntechnischen und zahnärztlichen Arbeiten, die auch von dem Patienten als unangenehm empfunden werden.

Erfindungsgemäß ist demgegenüber die Suprakonstruktion lösbar gestaltet, und zwar in einer besonderen Weise. Der Zugangskanal ist so realisiert, dass er an einer Lingual- bzw- Palatinalseite der Suprakonstruktion endet. Seine Mundhöhlenöffnung ist jedoch minimiert, denn der Durchmesser ist deutlich geringer als der Schraubenkopf und gerade so dick, dass ein minimiertes Werkzeug dort hindurchführbar ist. Die Öffnungsfläche kann ge-genüber dem Stand der Technik, wie er beispielsweise aus der vorgenannten EP 2 452 650 A1 ersichtlich ist, ein Drittel oder sogar ein Viertel betragen, so dass - bündige Realisierung des Pfropfens vorausgesetzt - er lingual sensorisch nicht mehr wahrnehmbar ist.

Erfindungsgemäß lässt sich daher trotz ästhetisch extrem befriedingender Resultate das beim Stand der Technik nachteilige Irritationshindernis beseitigen.

Erfindungsgemäß erfolgt das Lösen der Dentalrestauration zu Reparaturzwecken dann dergestalt, dass der Pfropfen, der aus PMMA, Keramik oder Zahnzement sein kann, kurzerhand entfernt wird - beispielsweise durch Aufbohren - dass dann durch ein geeignetes Werkzeug die Abutmentschraube lediglich leicht gelöst wird - ohne entnommen zu werden.

Damit löst sich die Verbindung zwischen dem Abutment und dem Implantat, aber die Schraube bleibt in der Suprakonstruktion und in dem Abutment gefangen, und die Kombination dieser beiden Teile wird kurzerhand dem Mund des Patienten entnommen.

Extracorporal werden dann die geeigneten Reparaturmaßnahmen durchgeführt. Selbstverständlich ist es auch beispielsweise durch Wärmebehandlung möglich, den verwendeten Adhesivkleber zu lösen und zu entfernen, wenn dies für die Reparatur sinnvoll ist.

Die reparierte Kombination aus Suprakonstruktion und Abutment lässt sich dann ohne thermische Beeinträchtigung des Patienten wieder in den Mund des Patienten einführen und die Abutmentschraube lässt sich in der gleichen Weise in umgekehrter Reihenfolge erneut festziehen und arretiert das Abutment und damit die Suprakonstruktion an dem Implantat. Nach Herausziehen des Werkzeugs, das beispielsweise als Schraubendreher ausgebildet ist, wird dann die Zugangsöffnung mit einem neuen Pforpfen verschlossen, der z.B. lichtgehärtet wird und exakt bündig die Mundhöhlenöffnung abschließt, beispielsweise gegebenenfalls durch Nachbearbeitung wie Schleifen.

Es versteht sich, dass die erfindungsgemäße Lösung nicht auf den Inzisalbereich beschränkt ist. Im Molarbereich lässt sich beispielsweise die Öffnung gerne in die Okklusalfläche der Molaren legen, beispielsweise in den Bereich von Fissuren und

Fossae, oder in einem okklusalen Randbereich, aber jedenfalls außerhalb von Höckerstrukturen. Aufgrund es ganz geringen Durchmessers von beispielsweise 0,8mm lässt sich auch hier der verwendete Pfropfen lingual sensorisch nicht wahrnehmen.

Erfindungsgemäß lässt sich der Schrägstellungswinkel zwischen dem Zugangskanal im Bereich der Öffnung und der Schraubenachse in weiten Bereichen an die Erfordernisse anpassen. So lässt sich beispielsweise mit einem gebogenen Zugangskanal ein Winkel zwischen 0° und 40° ohne weiteres realisieren.

Ein gebogener Zugangskanal, der bevorzugt einen über seinen Verlauf konstanten Radius und eine konstante Krümmung aufweist, lässt sich mittels eines Schraubendrehers mit biegsamer Welle bedienen, oder alternativ mittels eines Schraubendrehers mit einem getriebeartigen Antrieb.

Erfindungsgemäß besonders günstig ist es, wenn der gebogene Zugangskanal über die zuvor beschriebene Herstellungstechnik realisiert ist. Beispielsweise per selektiven Lasersintern, oder aber auch mittels CAD-Fräsen beziehungsweise Bohren wird ein Positivmodell der Suprakonstruktion bereitgestellt. Dieses wird eingebettet und das Positivmodell rückstandsfrei durch Wärmebehandlung entfernt. Der so verbleibende Hohlraum wird mit einer Presskeramik gefüllt, die gebrannt die Suprakonstruktion darstellt.

Alternativ kann auch ein gerader Zugangskanal in entsprechendem Schrägstellungswinkel eingesetzt werden, der sich bis zu einem Winkel von etwa 30° zur Abutmentschraubenachse erstrecken kann. Als Werkzeug gelangt dann ein Kugelkopf-Inbusschlüssel oder ein Kugelkopf-Torxschlüssel zum Einsatz, und durch Schrägstellung der Implantatachse zur Wurzelachse lassen sich weitere 10° Winkelkorrektur gewinnen, so dass insgesamt auch bei einem Schrägstellungswinkel von 40° der Wurzelachse zur Senkrechten zur Okklusionsebene die erwünschte Verlagerung der Öffnung an eine Lingual- bzw. Palatinalfläche der Suprakonstruktion gelingt.

Diese Lösung ist auch für die Realisierung von gefrästen Keramiken geeignet, da dann der Zugangskanal mit der entsprechend erforderlichen Formtreue beispielsweise durch eine Präzisionsbohrung hergestellt werden kann.

Erfindungsgemäß ist es auch günstig, dass sich die erfindungsgemäße Lösung unabhängig von der Anschlussform des Implantatkörpers, wie beispielsweise einen Innsechskant oder einen Außensechskant aufweisen kann, realisieren lässt, so dass auch verschiedene und zu den Implantaten passende Abutments erfindungsgemäß eingesetzt werden können.

Weitere Einzelheiten, Vorteile und Merkmale ergeben sich auch der nachfolgenden Beschreibung mehrerer Ausführungsbeispiele der Erfindung anhand der Zeichnungen.

Es zeigen:
- Fig. 1: eine Dentalrestauration gemäß dem Stand der Technik in einer schematischen Schnittansicht;
- Fig. 2: einen erfindungsgemäß hergestellten Block für die Bereitstellung einer Suprakonstruktion einer erfindungsgemäßen Dentalrestauration in einer Ausführungsform;
- Fig. 3: eine Darstellung einer erfindungsgemäßen Dentalrestauration in schematischer Form, wobei auch ein Werkzeug in Form eines Schraubendrehers dargestellt ist;
- Fig. 4: eine Teilansicht des Werkzeugs gemäß Fig. 3;
- Fig. 5: eine schematische Ansicht einer Modellierhilfe für die Bereitstellung eines erfindungsgemäßen Zugangskanals;
- Fig. 6: eine Darstellung einer weiteren Ausführungsform einer erfindungsgemäßen Dentalrestauration;
- Fig. 7: eine Detailansicht zu der Ausführungsform gemäß Fig. 6;
- Fig. 8: eine Ausführungsform einer Modellierhilfe für die Ausführungsform gemäß Fig. 6 und 7; und
- Fig. 9: eine Querschnitt-Darstellung eines Rohlings für die Bereitstellung einer erfindungsgemäßen Suprakonstruktion.

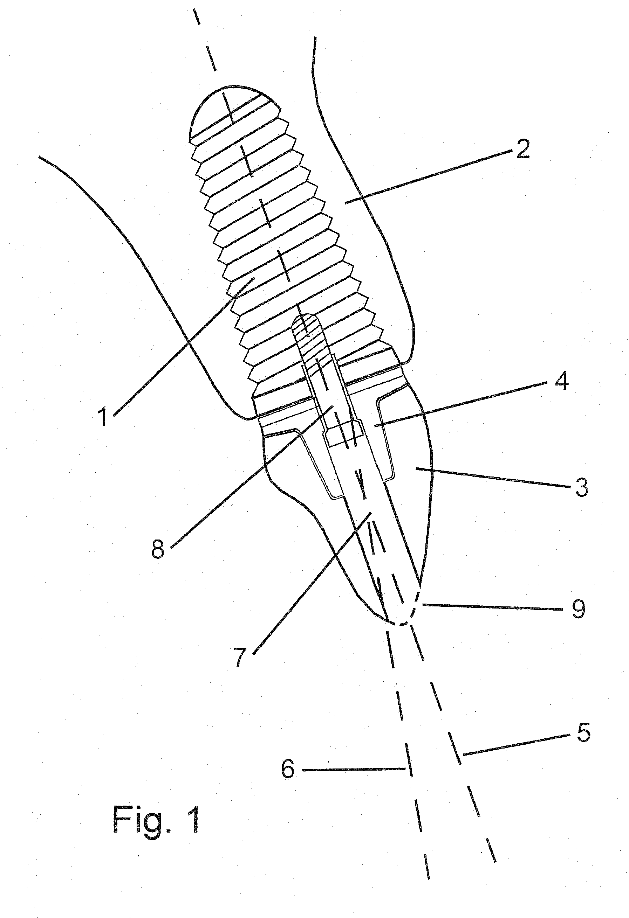

Aus Fig. 1 ist eine Dentalrestauration gemäß dem Stand der Technik ersichtlich. Für die Bereitstellung eines Zahnersatzes im Bereich der Frontzähne ist ein Implantat 1 vorgesehen, das in an sich bekannter Weise in einen Oberkieferknochen 2 einschraubbar ist.

Eine Suprakonstruktion 3 ist in dem dargestellten Ausführungsbeispiels als Frontzahn-Dentalkeramik ausgebildet. Sie ist auf einem Abutment 4 aufgeklebt. Das Abutment 4 ist mittels einer Abutmentschraube 8 mit dem Implantat verbunden und insofern befestigt. Hierbei ist zwischen dem Abutment 4 und der Suprakonstruktion 3 eine nicht dargestellte Klebefuge vorgesehen, die einen geeigeneten Zahnzement für die Bereitstellung einer Klebeverbindung aufnimmt.

Die Abutmentschraube 8 bildet eine Schraubenachse 5, die im Incisalbereich durch die Suprakonstruktion 3 verläuft. Diese Schraubenachse 5 ist leicht schräg zur Wurzelachse oder Zahnkronenachse ausgerichtet, da das Implantat 1 in Hinblick auf den vorliegenden Aufbau des Oberkieferknochens 2 hinsichtlich seiner Ausrichtung festgelegt ist.

Über einen gerade verlaufenden Zugangskanal 7 lässt sich die Abutmentschraube 8 einführen, festschrauben und bei Bedarf wieder entfernen.

Bei dieser Ausgestaltung gemäß dem Stand der Technik muss der Zugangskanal 7 entweder vollständig oder zumindest im Bereich seiner Öffnung gefüllt sein, typischerweise mit Kunststoffmaterial. Das Kunststoffmaterial ist weicher als die Dentalkeramik der Suprakonstruktion 3 und zudem sichtbar, nachdem es teilweise auch im labialen Bereich vorliegt.

Aus Fig. 2 ist ersichtlich, in welcher Weise ein erfindungsgemäßer Zugangkanal 10 alternativ realisiert werden kann. Der Zugangskanal 10 ist gekrümmt, und zwar mit einem konstanten Biegeradius. Der Innenradius 12 des Zugangskanals 10 erstreckt sich um ein Mittelpunkt M2, während der Außenradius 13 sich um einen Mittelpunk M1 erstreckt, so dass insofern eine leichte Aufweitung des Zugangskanals 10 vorgesehen ist. Diese ist jedoch minimal, beispielsweise um 2% des Durchmessers, und es ist genauso möglich, die Punkte M1 und M2 zusammenfallen zu lassen, so dass konzentrische Kreisabschnitte durch die Radien 12 und 13 realisiert werden.

Der Zugangskanal 10 ist in der Suprakonstruktion gefertigt, die in dem dargestellten Ausführungsbeispiel noch als Teil eines Blocks 14 vorliegt, also bevor die Form des Schneidezahns durch Fräsen oder dergleichen hergestellt ist. Im unteren Bereich bei 15 ist eine Profilierung vorgesehen, die genau dem Außendurchmesser und dem Außenprofil des zugehörigen Abutments entspricht.

Durch den minimal konischen Zugangskanal 10 ist die Entformung bei der Herstellung etwas erleichtert.

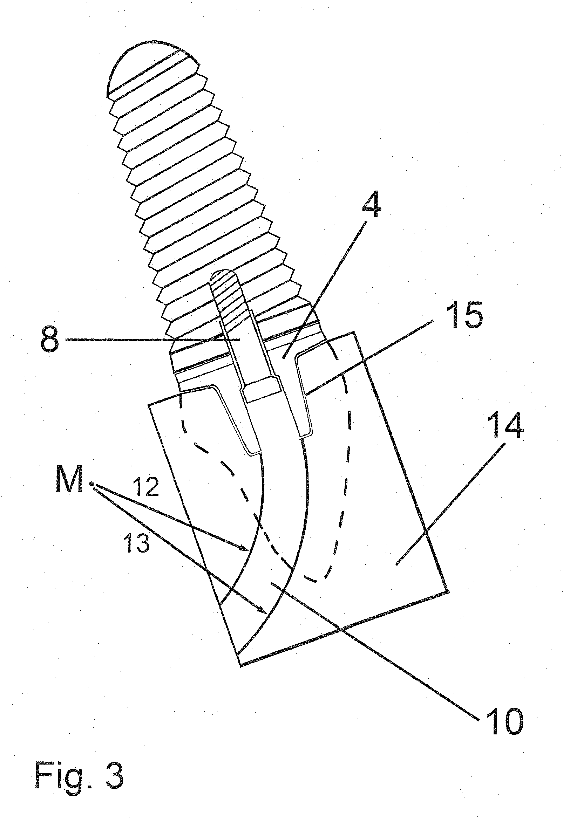

Aus Fig. 3 ist ersichtlich, in welcher Weise eine erfindungsgemäße Dentalrestauration mit Abutmentschraube 8 realisierbar ist. Die Abutmentschraube 8 ist durch den Zugangskanal 10 hindurch zu betätigen, wobei der Durchmesser des Zugangskanals 10 - auch wenn dies aus Fig. 3 nicht ganz deutlich wird - deutlich geringer als der Durchmesser des Kopfes der Abutmentschraube 8 ist. Ein Werkzeug ist als Schraubendreher ausgebildet und weist einen Schaft 16 und eine Greifhandhabe 17 auf. Der Schaft 16 ist mit einer biegsamen Welle versehen (vergleiche Fig. 2). An der Spitze läuft der Schaft 16 in einem Schraubprofil 18 aus. Das Schraubprofil 18 ist an die Schraubprofil-Geometrie der Abutmentschraube 8 angepasst und kann beispielsweise die Formen Inbus, Torx, Pozidriv, Achtkant oder andere haben.

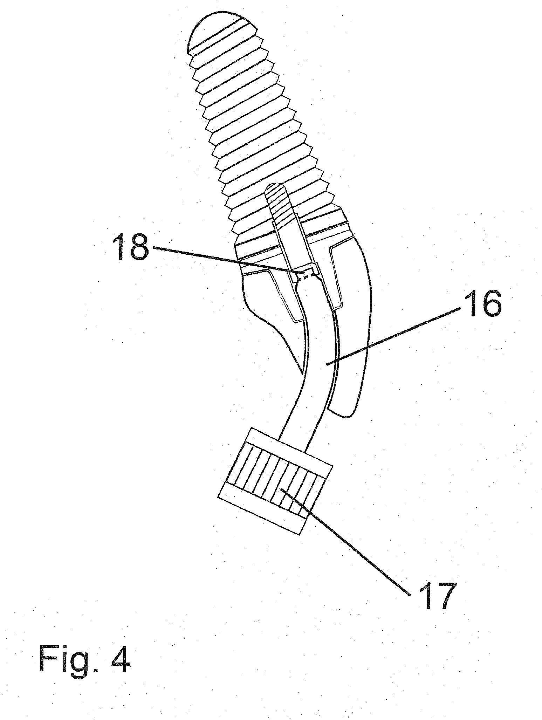

Aus Fig. 4 ist ersichtlich, in welcher Weise die biegsame Welle 19 sich durch den Schaft des Schraubendrehers hindurch erstreckt. In an sich bekannter Weise ermöglicht die biegsame Welle 19 ein Betätigen, also eine Drehmomentausübung auf das Schraubprofil 18 trotz Biegung des Schafts 16.

Wie aus Fig. 4 ersichtlich ist, ist zwischen dem Schraubprofil 18 und der biegsamen Welle 19 eine Einschnürung vorgesehen, die umlaufend ausgebildet ist, und auch ein leicht schräges Ansetzen des Schraubprofils in dem Schraubprofils der Abutmentschraube 8 ermöglicht.

Gemäß dem hier dargestellten Ausführungsbeispiel des Werkzeugs ist der Schaft 16 bzw. 20 biegsam. Alternativ ist es auch möglich, mit einem festen, kreisbogenförmigen Schaft zu arbeiten, der gegebenenfalls für die Übertragung noch größerer Drehmomente geeignet ist. In diesem Fall muss dafür Sorge getragen werden, dass die Abutmentschraube während des gesamten Schraubvorgangs mit ihrem Schraubprofil im Eingriff mit dem Schraubprofil des Werkzeugs bleibt, wobei für die Sicherstellung dieser Maßnahme der Einfachheit halber beide Schraubprofile in axialer Richtung der Schraube verlängert werden können. Alternativ lässt sich auch lediglich der letzte kurze Teilbereich des Schaftes 16 flexibel ausgestalten, so dass der Schaft beim Einschrauben der Schraube in diesem Bereich sich auch grade ausrichten lässt.

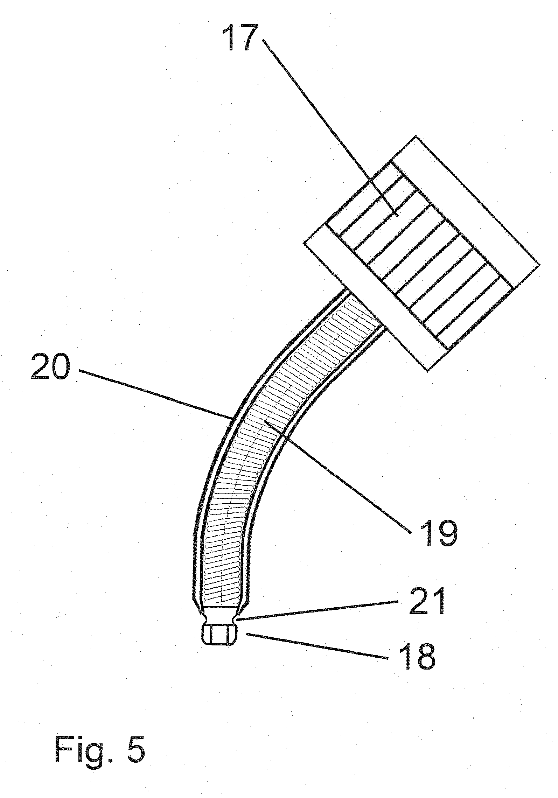

Aus Fig. 5 ist eine Modellierhilfe 32 ersichtlich, die für die Herstellung des Schraubenkanals über ein Positivmodell in Lost-Wax-Technik dient. Die Modellierhilfe 32 weist dementsprechend einen gebogenen Kanal 10 und eine Anschlussgeometrie 15 zur Bereitstellung einer Klebebasis für das Abutment auf. Hier sind Innenradius und Außenradius konzentrisch gewählt, und der Durchmesser des Kanals 10 ergibt sich aus der Differenz der beiden Radien 12 und 13.

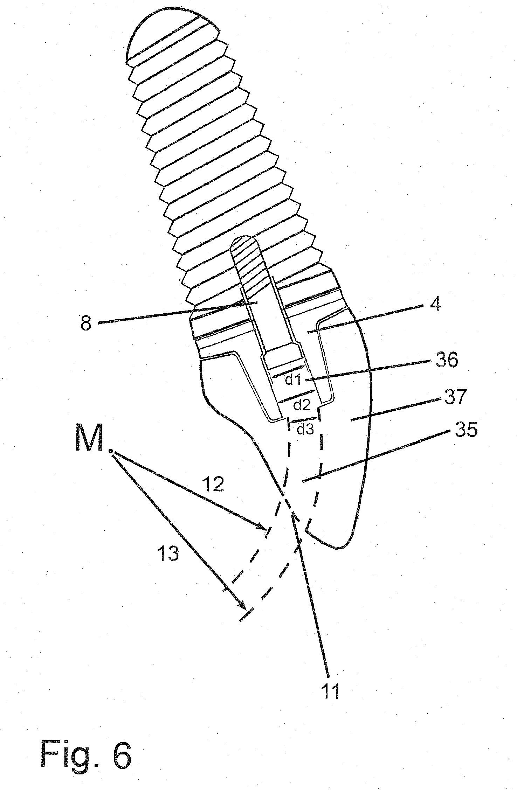

Aus Fig. 6 ist eine weitere Ausgestaltung einer erfindungsgemäßen Dentalrestauration ersichtlich. Im sagittalen Schnitt erstreckt sich der Zugangskanal 10 mit einem konstanten Durchmesser D3. Ein Kamin 36 des Abutments 4 weist einen Durchmesser D2 auf, der etwas größer als der Durchmesser D1 des Kopfes der Abutmentschraube 8 ist. Es besteht die Beziehung: D3<D1<D2, wobei der Unterschied zwischen D1 und D2 für die Schraubbarkeit der Abutmentschraube 8 erforderlichen Minimalspiel entspricht.

Für die Montage der erfindungsgemäßen Dentalrestauration wird zunächst das Abutment 4 über die Abutmentschraube 8 in das Implantat 1 eingeschraubt und dort sicher befestigt. Es wird dann ein geeigneter Kleber wie ein Zahnzement aufgetragen, wobei ein Klebespalt 20 eine gleiche Dicke über seinen Verlauf aufweist.

Die Suprakonstruktion 3 wird dann auf das Abutment 4 aufgeklebt. Entweder bevor dies erfolgt, oder auch nachdem das Aufkleben erfolgt ist wird im Bereich der Öffnung 11 der Zugangkanal 7 mit einem PMMA-Pfropfen verschlossen. Dieser wird über Lichthärtung ausgehärtet und bündig geschliffen.

In einer alternativen, bevorzugten Ausgestaltung ist es vorgesehen, anstelle des PMMA-Pfropfen einen Keramikpfropfen oder einen solchen aus Zahnzement zu realisieren, der extracorporal angebracht wird. Hiermit lassen sich Zungen-Irritationshindernisse durch den PMMA-Pfropfen weiter reduzieren.

Auch wenn der Durchmesser D3 in Fig. 6 vergleichsweise groß dargestellt ist, versteht es sich, dass er in der Praxis auch deutlich kleiner gehalten werden kann und lediglich die Hindurchführung des Schaftes eines geeigneten Werkzeugs erfordert.

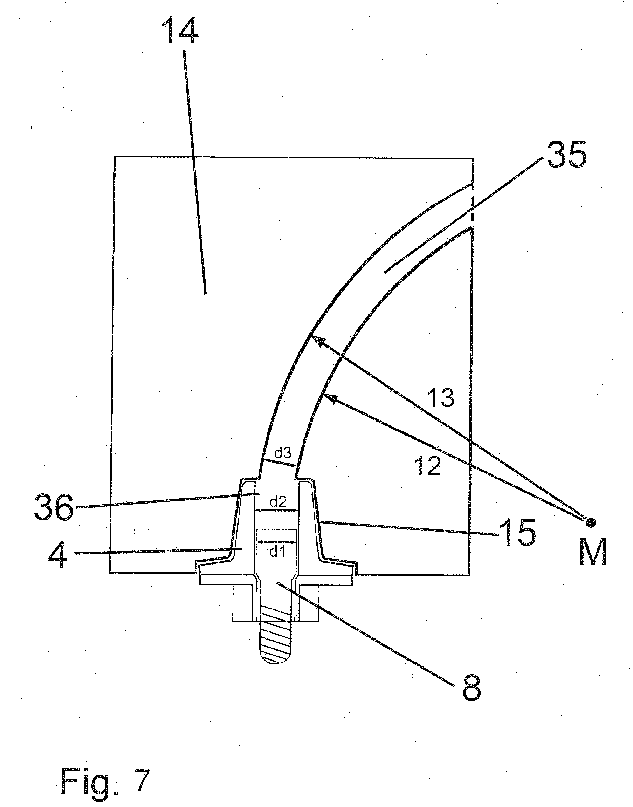

Aus Fig. 7 ist erneut ersichtlich, wie der Zugangskanal 35 auch bereits beim Herstellen eines Blocks 14 für die Bereitstellung der dortigen Suprakonstruktion realisiert sein kann.

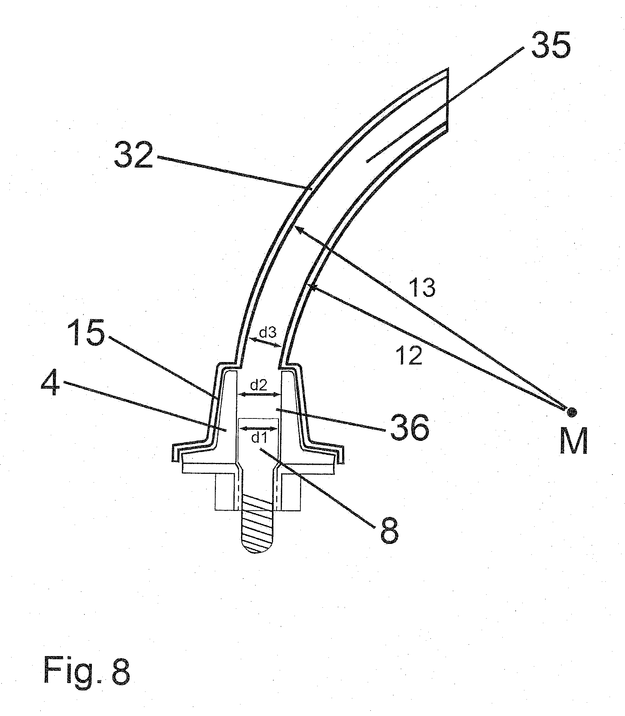

Aus Fig. 8 ist wiederum ersichltich, wie eine hierfür geeignete Modellierhilfe 32 eingesetzt werden kann, um die exakte Form des Zugangskanals 35 in Lost-Wax-Technik zu ermöglichen.

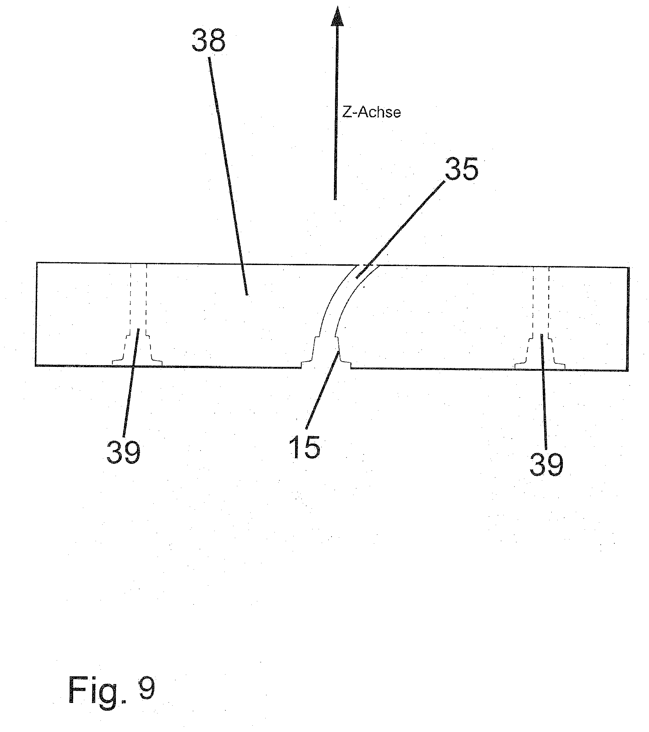

Beispielhaft ist aus Fig. 9 ein spanabhebend, also subtraktiv bearbeitbarer Rohling 38 ersichtlich. Dieser ist im dargestellten Ausführungsbeispiel als flacher Zylinder ausgebildet und für die Bereitstellung mehrerer Suprakonstruktionen für Dentalrestaurationen bestimmt.

Bevor die Suprakonstruktion selbst per CAD/CAM ausgefräst wird, wird der jeweils vorgesehene Zugangskanal 35 bzw. 39 erstellt. Diese Lösung ist auch für mehrgliedrige Dentalrestaurationen geeignet, bei denen sich mehrere Zugangskanäle für die entsprechenden Pfeilerzähne durch den Rohling 38 hindurch erstrecken. Alternativ lassen sich gerade Zugangskanäle 39 auch per CAD/CAM erzeugen.

## Patentansprüche

1. Dentalrestauration, mit einem Basiskörper, der aus einem Implantat (1) in Kombination mit einem Abutment (4) besteht, einer Suprakonstruktion (3), welche an dem Basiskörper befestigbar ist, insbesondere über Kleben, und einer Schraube (8) mit einem Schraubenkopf der sich auf oder an dem Basiskörper erstreckt wenn die Schraube (8) die beiden Teile des Basiskörpers miteinander drehfest verbindet, und mit einem Zugangskanal (10) in der Suprakonstruktion (3) für die Schraube (8), dessen Öffnung gegenüber der Verlängerung der Achse der Schraube in lingualer bzw. palatinaler Richtung der Suprakonstruktion (3) versetzt ist, **dadurch gekennzeichnet, dass** der Durchmesser des Zugangskanals (10), welcher mit einem konstanten Biegeradius gekrümmt ist und an der Lingual -bzw. Palatinalfläche der Suprakonstruktion (3) endet, kleiner als der Durchmesser des Schraubenkopfs der Schraube (8) ist und die Schraube (8) durch den Zugangskanal (10) hindurch schraubbar, also einschraubbar und ausschraubbar ist, und dass das Abutment (4) eine Auflage für den Schraubenkopf der Schraube bildet.

2. Dentalrestauration nach Anspruch 1, **dadurch gekennzeichnet, dass** der Zugangskanal bogenförmig verläuft und sich zwischen dem Schraubenkopf der Schraube und einer Lingual -bzw. Palatinalfläche der Suprakonstruktion (3) erstreckt.

3. Dentalrestauration nach einem der vorhergehenden Ansprüche, **dadurch gekennzeichnet, dass** der Zugangskanal (10) über seinen Verlauf den gleichen Radius aufweist.

4. Dentalrestauration nach einem der vorhergehenden Ansprüche, **dadurch gekennzeichnet, dass** die Öffnung des Zugangskanals (10) an der Lingual- bzw. Palatinalfläche der Suprakonstruktion (3) eine Querschnittfläche aufweist, deren Größe höchstens so groß wie der Querschnitt des Zugangskanals an anderen Stellen als dem Bereich der Öffnung ist.

5. Dentalrestauration nach einem der vorhergehenden Ansprüche, **dadurch gekennzeichnet, dass** die Achse des Zugangskanals (10) schräg, insbesondere in einem Winkel zwischen 1° und 45°, vorteilhaft zwischen 5° und 30°, bevorzugt zwischen 10° und 20° und besonders bevorzugt etwa 15° zur Lingual- bzw. Palatinalfläche der Suprakonstruktion (3) verläuft und die Öffnung elliptisch ausgebildet ist.

6. Dentalrestauration nach einem der vorhergehenden Ansprüche, **dadurch gekennzeichnet, dass** die Verlängerung der Schraubenachse (5) eine Vestibulärfläche der Suprakonstruktion (3) schneidet und diese Achse und die Achse des Zugangskanals (10) in einem Winkel 1° bis 45° zwischen 5° und 30°, bevorzugt zwischen 10° und 20° und besonders bevorzugt etwa 15° voneinander divergieren.

7. Dentalrestauration nach einem der vorhergehenden Ansprüche, **dadurch gekennzeichnet, dass** die Suprakonstruktion (3) als Schneidezahn- oder Eckzahn-Suprastruktur ausgebildet ist und die Öffnung an der Lingual- bzw. Palatinalseite der Suprastruktur sich von einem zervikalen zu einem inzisalen Ende erstreckt, und dass der Abstand des inzisalen Endes von der Inzisalfläche der Suprastruktur höchstens das Doppelte, insbesondere etwas das Einfache, des Abstandes zwischen inzisalem und zervikalem Ende der Öffnung beträgt.

8. Dentalrestauration nach einem der vorhergehenden Ansprüche, **dadurch gekennzeichnet, dass** die Suprakonstruktion an sich bekannter Weise aus einem Block gefertigt, insbesondere per CAM gefräst ist und dass der Zugangskanal (10) den Block durchtreten kann.

9. Dentalrestauration nach einem der vorhergehenden Ansprüche, **dadurch gekennzeichnet, dass** die Suprakonstruktion (3) den Zugangskanal (10) in gebogener Form aufweist und über ein Positivmodell herstellbar ist, das generativ, insbesondere per Rapid-Prototyping, herstellbar ist, eingebettet und durch Wärmebehandlung rückstandsfrei entfernbar ist, und dass die Suprakonstruktion (3) insbesondere durch Pressen in so erzeugten Hohlraum erzeugbar ist und insbesondere aus Keramik besteht.

10. Dentalrestauration nach einem der vorhergehenden Ansprüche, **dadurch gekennzeichnet, dass** die Öffnung bei Ausbildung der Suprakonstruktion (3) als Molar-oder Prämolar-Suprakonstruktion (3) an eine Höckerstruktur der Okklusalfläche angrenzend, jedoch von der Basis des Höckers um mindestens 0,5mm beabstandet, ausgebildet ist.

11. Dentalrestauration nach einem der vorhergehenden Ansprüche, **dadurch gekennzeichnet, dass** der Schraubenkopf ein Schraubprofil wie ein Pozidrivprofil, ein Inbusprofil oder ein Torxprofil aufweist und der Durchmesser des Zugangskanals um weniges, insbesondere um höchstens 10%, bevorzugt um 5%, größer als der Durchmesser des Schraubprofils ist, insbesondere an dem schraubenkopfseitigen Ende des Zugangskanals (10).

12. Dentalrestauration nach einem der vorhergehenden Ansprüche, **dadurch gekennzeichnet, dass** das Schraubprofil als Inbusprofil oder als Torxprofil ausgebildet ist, das schraubenseitig konkav, insbesondere kugelsegmentförmig endet und für die Aufnahme eines Kugelkopf-inbuswerkeugs bzw. -Torxwerkzeugs ausgebildet ist, und dass der Zugangskanal sich gerade durch die Suprastruktur in einem dem Durchmesser des Schraubprofils im wesentlichen entsprechenden Durchmesser erstreckt.

13. Dentalrestauration nach einem der vorhergehenden Ansprüche, **dadurch gekennzeichnet, dass** der Winkel zwischen der Schraubenachse (5) und der Zugangkanalachse patientenspezifisch individuell angepasst ist und insbesondere so eingestellt ist, dass bei einer Inzisal- oder Eckzahn-Suprakonstruktion (3) die Öffnung des Zugangskanals (10) an der Lingual- bzw. Palatinalfläche an die Inzisalfläche angrenzt oder höchstens 1mm von dieser beabstandet ist.

14. Dentalrestauration nach einem der vorhergehenden Ansprüche, **dadurch gekennzeichnet, dass** die Suprakonstruktion (3) eine einem Abutment (4) und/oder Implantat (1) zugewandte Klebefläche aufweist, die gegenüber dem Abutment (4) und/oder dem Implantat (1) einen Klebespalt belässt, wobei der Klebespalt sich insbesondere ausschließlich zwischen der Suprakonstruktion (3) und dem Abutment (4) erstreckt.

15. Dentalrestauration nach einem der vorhergehenden Ansprüche, **dadurch gekennzeichnet, dass** der Zugangskanal (10) einen Durchmesser aufweist, der um weniges, insbesondere zwischen 3% und 40%, bevorzugt zwischen 7% und 20% und besonders bevorzugt zwischen 10% und 15% größer als der Durchmesser eines Schraubendreherschafts eines Schraubendrehers mit einem zu dem Schraubprofil passenden Schraubendreherprofil ist.

16. Dentalrestauration nach Anspruch 1, **dadurch gekennzeichnet, dass** die Seite des Zugangskanals (10) mit dem größten Radius als Führungsfläche für den Schaft (16) des Schraubendrehers, welcher eine biegsame Welle (19) aufweist, die seinen Schaft (16) bildet, ausgebildet ist.

17. Dentalrestauration nach einem der vorhergehenden Ansprüche, **dadurch gekennzeichnet, dass** die Dentalrestauration für einen Seitenzahn, insbesondere im Unterkiefer, bestimmt ist, bei welchem die Wurzelachse bzw. die Implantatachse die Lingualseite bzw. die Palatinalseite der Suprakonstruktion (3) durchtritt und dass der erfindungsgemäße Zugangskanal (10) gegenüber dieser Achse nach bukkal versetzt ist und insbesondere an einer Fosae oder Fissur der Okklusalfläche des Molaren endet.

## Claims

1. A dental restoration, comprising a base body consisting of an implant (1) in combination with an abutment (4), a superstructure (3) which is attachable to the base body, especially by adhesive bonding, and a screw (8) with a screw head, which extends on or at the base body, when the screw (8) connects the two parts of the base body to each other in a rotationally fixed manner, and having an access channel (10) in the superstructure (3) for the screw (8), the opening of which access channel being located opposite to the extension of the axis of the screw in lingual or palatal direction of the superstructure (3), **characterized in that** the diameter of the access channel (10), which is bent with a constant bending radius and terminates at the lingual or palatal surface of the superstructure (3), is smaller than the diameter of the screw head of the screw (8), and the screw (8) is able to be screwed through the access channel (10), i.e. it is insertable and removable, and **in that** the abutment (4) forms a support for the screw head of the screw.

2. The dental restoration according to claim 1, **characterized in that** the access channel is bent and extends between the screw head of the screw and a lingual or palatal surface of the superstructure (3).

3. The dental restoration according to of the preceding claims, **characterized in that** the access channel (10) has the same radius along its course.

4. The dental restoration according to one of the preceding claims, **characterized in that** the opening of the access channel (10) at the lingual or palatal surface of the superstructure (3) has a cross-sectional area the size of which is at most as large as the cross-section of the access channel at locations different from the region of the opening.

5. The dental restoration according to one of the preceding claims, **characterized in that** the axis of the access channel (10) extends obliquely, especially at an angle between 1° and 45°, advantageously between 5° and 30°, preferably between 10° and 20° and particularly preferably about 15° in relation to the lingual or palatal surface of the superstructure (3), and the opening is formed elliptically.

6. The dental restoration according to one of the preceding claims, **characterized in that** the extension of the screw axis (5) intersects a vestibular surface of the superstructure (3) and said axis and the axis of the access channel (10) diverge from each other at an angle of 1° to 45° between 5° and 30°, preferably between 10° and 20° and particularly preferably about 15°.

7. The dental restoration according to one of the preceding claims, **characterized in that** the superstructure (3) is designed as an incisor superstructure or canine superstructure and the opening on the lingual or palatal side of the superstructure extends from a cervical to an incisal end, and **in that** the distance of the incisal end from the incisal surface of the superstructure is at most twice, especially somewhat once, the distance between the incisal and cervical end of the opening.

8. The dental restoration according to one of the preceding claims, **characterized in that** the superstructure is manufactured in a manner known per se from one block, especially milled by CAM, and **in that** the access channel (10) may pass through the block.

9. The dental restoration according to one of the preceding claims, **characterized in that** in the superstructure (3) the access channel (10) is in a bent shape, and may be produced using a positive model which may generatively be produced, especially by rapid prototyping, and is embedded and is removable residue-free by heat treatment, and **in that** the superstructure (3) is obtainable especially by pressing into a cavity thus produced, and especially consists of ceramic.

10. The dental restoration according to one of the preceding claims, **characterized in that**, when the superstructure (3) is formed, the opening is designed as a molar or premolar superstructure (3) adjacent to a cusp structure of the occlusal surface, but spaced apart from the base of the cusp by at least 0.5 mm.

11. The dental restoration according to one of the preceding claims, **characterized in that** the screw head has a screw profile such as a pozidriv profile, an inbus profile or a torx profile, and the diameter of the access channel is slightly larger, especially by at most 10%, preferably by 5%, than the diameter of the screw profile, especially at the screw head end of the access channel (10).

12. The dental restoration according to one of the preceding claims, **characterized in that** the screw profile is designed as an inbus profile or as a torx profile which terminates concavely, especially in the form of a spherical segment, on the screw side and is designed to receive a spherical-head inbus tool or torx tool, and **in that** the access channel extends straight through the superstructure with a diameter that essentially corresponds to the diameter of the screw profile.

13. The dental restoration according to one of the preceding claims, **characterized in that** the angle between the screw axis (5) and the access channel axis is individually adapted to the patient and especially is set such that in an incisal or canine superstructure (3) the opening of the access channel (10) at the lingual or palatal surface is adjacent to the incisal surface, or is paced apart therefrom not more than 1 mm.

14. The dental restoration according to one of the preceding claims, **characterized in that** the superstructure (3) has an adhesive surface facing an abutment (4) and/or implant (1), which leaves an adhesive gap opposite the abutment (4) and/or the implant (1), the adhesive gap extending especially exclusively between the superstructure (3) and the abutment (4).

15. The dental restoration according to one of the preceding claims, **characterized in that** the access channel (10) has a diameter which is slightly larger, especially between 3% and 40%, preferably between 7% and 20% and particularly preferably between 10% and 15%, than the diameter of a screwdriver shaft of a screwdriver having a screwdriver profile that matches the screw profile.

16. The dental restoration according to claim 2, **characterized in that** the side of the access channel (10) with the largest radius is designed as a guide surface for the shaft (16) of the screwdriver, which has a flexible shaft (19), which flexible shaft forming the shaft (16) thereof.

17. The dental restoration according to one of the preceding claims, **characterized in that** the dental restoration is intended for a lateral tooth, especially in the lower jaw, in which the root axis or the implant axis passes through the lingual side or the palatal side of the superstructure (3), and **in that** the access channel (10) according to the invention is offset in the buccal direction with respect to this axis and terminates especially at a fossae or fissure of the occlusal surface of the molar.

## Revendications

1. Restauration dentaire, avec un corps de base constitué d'un implant (1) en combinaison avec un pilier (4), une superstructure (3) qui peut être fixée au corps de base, notamment par collage, et une vis (8) avec une tête de vis qui s'étend sur ou au niveau du corps de base, lorsque la vis (8) relie les deux parties du corps de base l'une à l'autre de manière fixe en rotation, et avec un canal d'accès (10) dans la superstructure (3) pour la vis (8), dont l'ouverture est située à l'opposé de l'extension de l'axe de la vis en direction linguale ou palatine de la superstructure (3), **caractérisé en ce que** le diamètre du canal d'accès (10), qui est courbé avec un rayon de courbure constant et se termine à la surface linguale ou palatine de la superstructure (3), est inférieur au diamètre de la tête de la vis (8) et la vis (8) peut être vissée à travers le canal d'accès (10), c'est-à-dire peut être vissée et dévissée, et **en ce que** la butée (4) forme un support pour la tête de la vis.

2. Restauration dentaire selon la revendication 1, **caractérisée en ce que** le canal d'accès est courbé et s'étend entre la tête de la vis et une surface linguale ou palatine de la superstructure (3).

3. Restauration dentaire selon l'une des revendications précédentes, **caractérisée en ce que** le canal d'accès (10) présente le même rayon au long de son parcours.

4. Restauration dentaire selon l'une des revendications précédentes, **caractérisée en ce que** l'ouverture du canal d'accès (10) présente une surface de section transversale sur la surface linguale ou palatine de la superstructure (3) dont la taille maximale est aussi grande que la section transversale du canal d'accès à des endroits autre que la zone de l'ouverture.

5. Restauration dentaire selon l'une des revendications précédentes, **caractérisée en ce que** l'axe du canal d'accès (10) s'étend obliquement, en particulier dans un angle entre 1° et 45°, avantageusement entre 5° et 30°, de préférence entre 10° et 20° et de manière particulièrement préférée environ 15°, par rapport à la surface linguale ou palatine de la superstructure (3), et l'ouverture est elliptique.

6. Restauration dentaire selon l'une des revendications précédentes, **caractérisée en ce que** le prolongement de l'axe de la vis (5) coupe une surface vestibulaire de la superstructure (3) et que cet axe et l'axe du canal d'accès (10) divergent l'un de l'autre dans un angle de 1° à 45° entre 5° et 30°, de préférence entre 10° et 20° et de manière particulièrement préférée d'environ 15°.

7. Restauration dentaire selon l'une des revendications précédentes, **caractérisée en ce que** la superstructure (3) est conçue comme une superstructure incisive ou canine et que l'ouverture du côté lingual ou palatin de la superstructure s'étend d'une extrémité cervicale à une extrémité incisive, et que la distance de l'extrémité incisive à la surface incisive de la superstructure est au maximum le double, en particulier environ une fois la distance entre l'extrémité incisive et l'extrémité cervicale de l'ouverture.

8. Restauration dentaire selon l'une des revendications précédentes, **caractérisée en ce que** la superstructure est réalisée d'une manière connue en soi à partir d'un bloc, en particulier est fraisé par FAO, et que le canal d'accès (10) peut passer à travers le bloc.

9. Restauration dentaire selon l'une des revendications précédentes, **caractérisée en ce que** la superstructure (3) présente le canal d'accès (10) sous une forme incurvée et peut être fabriquée par l'intermédiaire d'un modèle positif qui peut être fabriqué de manière générative, en particulier par prototypage rapide, est encastré et peut être retiré sans résidus par traitement thermique, et **en ce que** la superstructure (3) peut être fabriquée en particulier par pressage dans les cavités ainsi produites et est constituée en particulier de céramique.

10. Restauration dentaire selon l'une des revendications précédentes, **caractérisée en ce que** l'ouverture est conçue comme une superstructure molaire ou prémolaire (3) adjacente à une structure à protubérance de la surface occlusale, mais espacée de la base de la protubérance d'au moins 0,5 mm lorsque la superstructure (3) est formée.

11. Restauration dentaire selon l'une des revendications précédentes, **caractérisée en ce que** la tête de vis présente un profil de vis tel qu'un profil pozidriv, un profil Allen ou un profil torx et le diamètre du canal d'accès est légèrement, en particulier maximal de 10 %, de préférence de 5 %, plus grand que le diamètre du profil de vis, en particulier à l'extrémité de la tête de vis du canal d'accès (10).

12. Restauration dentaire selon l'une des revendications précédentes, **caractérisée en ce que** le profil de la vis est conçu comme profil Allen ou comme profil Torx qui se termine de manière concave, en particulier sous forme de segment sphérique, du côté de la vis et est conçu pour recevoir un outil Allen à tête sphérique ou un outil Torx, et **en ce que** le canal d'accès (10) est conçu pour être relié au côté de la tête de vis du canal d'accès (10).

13. Restauration dentaire selon l'une des revendications précédentes, **caractérisée en ce que** l'angle entre l'axe de la vis (5) et l'axe du canal d'accès est adapté individuellement au patient et est réglé en particulier de telle manière que, dans une superstructure incisive ou canine (3), l'ouverture du canal d'accès (10) à la surface linguale ou palatine se trouve adjacente à la surface incisive ou à 1 mm au maximum de celle-ci.

14. Restauration dentaire selon l'une des revendications précédentes, **caractérisée en ce que** la superstructure (3) présente une surface adhésive tournée vers un pilier (4) et/ou un implant (1), qui laisse une fente de collage en face du pilier (4) et/ou de l'implant (1), où l'espace de collage s'étend en particulier exclusivement entre la superstructure (3) et le pilier (4).

15. Restauration dentaire selon l'une des revendications précédentes, **caractérisée en ce que** le canal d'accès (10) présente un diamètre légèrement, en particulier entre 3% et 40%, de préférence entre 7% et 20% et de manière particulièrement préférée entre 10% et 15% supérieur au diamètre de la tige d'un tournevis dont le profil correspond au profil de la vis.

16. Restauration dentaire selon la revendication 1, **caractérisée en ce que** le côté du canal d'accès (10) ayant le plus grand rayon est conçu comme surface de guidage pour la tige (16) du tournevis, qui présente un arbre flexible (19) qui forme sa tige (16).

17. Restauration dentaire selon l'une des revendications précédentes, **caractérisée en ce que** la restauration dentaire est destinée à une dent latérale, en particulier dans la mâchoire inférieure, déterminée 1ère, dans laquelle l'axe de la racine ou l'axe de l'implant passe par le côté lingual ou le côté palatin de la superstructure (3), et **en ce que** le canal d'accès (10) selon l'invention est décalé buccalement par rapport à cet axe et en particulier se termine sur une fosse ou une fissure de la surface occlusale de la molaire.
